# EUROPEAN PATENT APPLICATION

(11) **EP 1 535 511 A1**
(43) Date of publication of application: **01.06.2005**
(21) Application number: 04024938.5
(22) Date of filing: 20.10.2004
(51) Int. Cl.: A01K 31/06

(54) **Platform for cages, particularly for small animals such as rodents**

(30) Priority: 28.11.2003 IT pd20030110 U
(71) Applicant: Marchioro S.p.A. Stampaggio Materie Plastiche, 36033 Isola Vicentina - Fraz. Castelnovo, Vicenza (IT)
(72) Inventor: Marchioro, Domenico, 36033 ISOLA VICENTINA Fraz. CASTELNOVO (IT)
(74) Representative: Modiano, Guido, Dr.-Ing.

(57) **Abstract**

A platform for cages, particularly for small animals such as rodents and the like, comprising a deck (11, 111) provided with elements (12) for fixing to the grid-like walls (51) of a cage (50), the deck (11, 111) having telescopic extension elements (13) for adapting its extension to the dimensions of the cage (50) that are constituted by at least one additional deck (14, 114), which is adapted to slide, by way of guiding elements (15), parallel and adjacent to the deck (11, 111), the deck containing the additional deck in a shorter retracted configuration of the platform (10, 110, 210).

## Description

The present invention relates to a platform for cages, particularly for small animals such as rodents and the like.

The aim of the present invention is to provide a platform that can be installed easily inside cages of very different sizes.

Within this aim, an object of the present invention is to provide a platform whose length can vary so as to be arranged longitudinally or transversely in a same cage.

Another object of the present invention is to provide a platform on which the occupants of the cage can move and stay without dangers for their safety and from which the small animals can descend and climb nimbly and instinctively.

Another object of the present invention is to provide a platform for cages, particularly for small animals such as rodents and the like, that can be manufactured with known systems and technologies.

This aim and these and other objects that will become better apparent hereinafter are achieved by a platform for cages, particularly for small animals such as rodents and the like, of the type constituted by a deck provided with means for fixing to the grid-like walls of a cage, characterized in that said deck has telescopic extension means for adapting to the dimensions of said cage.

Advantageously, said extension means are constituted by at least one additional deck, which is suitable to slide, by way of guiding means, parallel and adjacent to said deck, which contains it in a shorter retracted configuration of said platform.

Further characteristics and advantages of the invention will become better apparent from the following detailed description of a preferred but not exclusive embodiment thereof, illustrated by way of non-limiting example in the accompanying drawings, wherein:

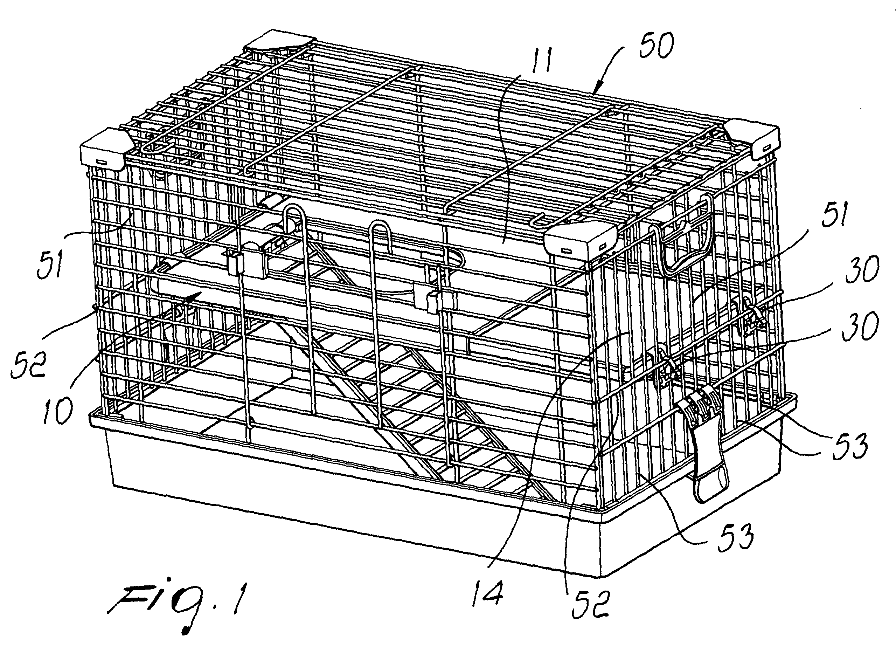

Figure 1 is a perspective view of a platform according to the invention, installed in a cage for small animals;

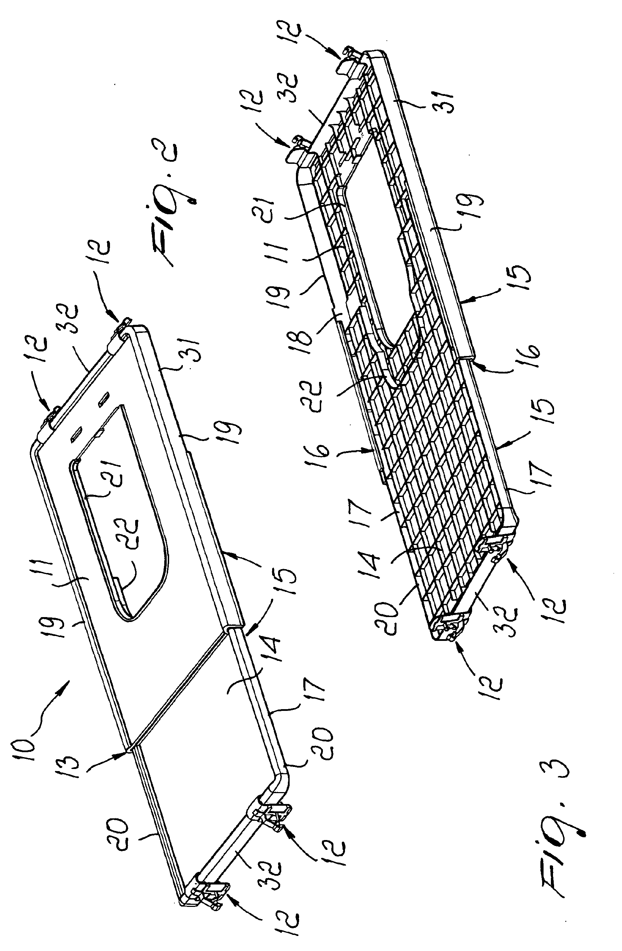

Figure 2 is a top perspective view of a platform according to the invention, in the extended configuration;
Figure 3 is a bottom perspective view of the platform of Figure 2;

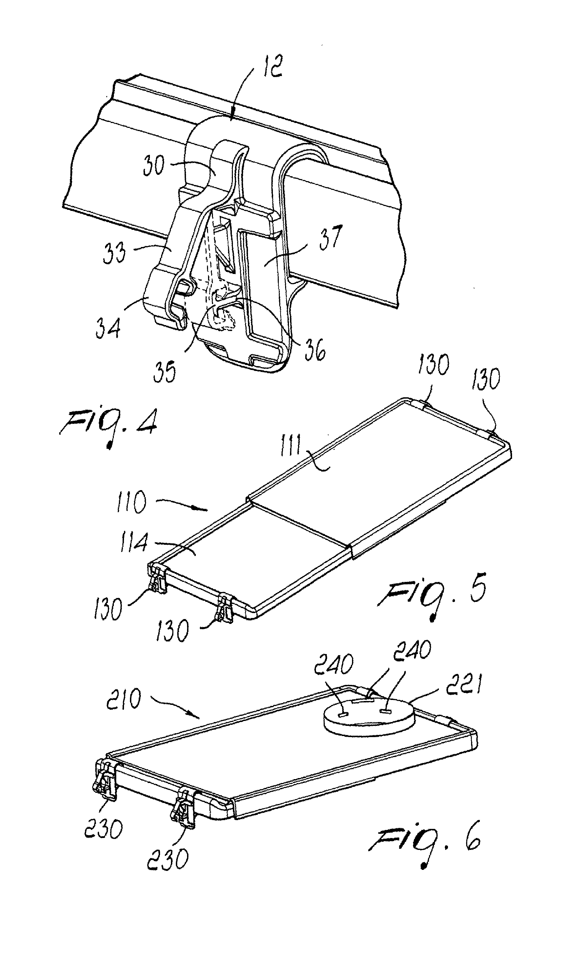

Figure 4 is a perspective view of a detail of a platform according to an embodiment of the invention;
Figure 5 is a perspective view of a platform according to the invention, in a second embodiment, in the extended configuration;
Figure 6 is a perspective view of a platform according to the invention, in a third embodiment, in the retracted configuration.

With reference to the figures, a platform for cages, particularly for small animals such as rodents and the like, is generally designated by the reference numeral 10.

The platform 10, provided with means 12 for fixing to grid-like walls 51 of a cage 50, comprises a first deck 11.

The first deck 11 has telescopic extension means 13 for adapting to the dimensions of the cage 50.

The telescopic extension means 13 are constituted by a second deck 14, which is suitable to slide, with guiding means 15, parallel and adjacent to the first deck 11.

The second deck 14, in a shorter retracted configuration of the platform 10, is substantially contained within the first deck 11.

The guiding means 15 are formed by two sliding guides 16 provided on the first deck 11.

Complementarily shaped sliding strips 17, rigidly coupled to the second deck 14, engage in the guides 16.

The sliding guides 16 are formed by two lateral guides 18 provided inside longitudinal edges 19 of the first deck 11 and arranged below the first deck 11.

The complementarily shaped strips 17 are constituted by the corresponding outer lateral edge 20 of the second deck 14.

The first deck 11 has a passage 21 for small animals and the like, which have to climb on it or off it in order to access another similar platform arranged above or below.

Accordingly, the second deck 14 is provided with an opening 22 at the passage 21.

The opening 22 is shaped so as to not obstruct the passage 21 when the platform 10 is in the retracted configuration and therefore also not obstruct it in the many intermediate configurations between the fully extended one and the fully retracted one, which is shown for example in Figure 6.

In a second embodiment of a platform according to the invention, designated by the reference numeral 110, the first deck 111 and the second deck 114 have no openings.

Such a platform 110 is designed particularly not only for the transit of small animals but also to accommodate within its perimeter shelters, drinking troughs and other similar accessories for said small animals.

The passage 21 on the first deck, and therefore also the corresponding opening 22 on the second deck, have different dimensions depending on the small animal for which they are intended.

In a third embodiment of a platform according to the invention, designated by the reference numeral 210, the passage 221 is a hole, conveniently provided with seats 240 for the engagement for example of a crawling tube for small animals, which is not shown and is of the type disclosed in EP-1 159 872, in the name of the same Applicant.

The fixing means 12 are constituted by four hooks 30, which can move along the perimeter border 31 of the platform 10 and are arranged in pairs on sides 32 that lie transversely with respect to the direction of extension of the platform 10.

Each one of the hooks 30 comprises an articulated arm 33, which is suitable to wrap around a cross-member 52 of a grid-like wall 51.

The arm 33 interlocks reversibly by means of a head 34, which is shaped so as to accommodate an end 35 of a mushroom-shaped tab 36.

The tab 36 protrudes below the cross-member 52 from a plate-like portion 37 of the hook 30.

Likewise, the second and third embodiments of the platform 10, i.e., the platforms designated by the reference numerals 110 and 210, are also provided with identical hooks 130 and 230.

The platform 10, 110, 210 according to the invention can be installed easily, since it requires, for extension, only a traction so as to make the second deck exit from the first one.

Likewise, for retraction it is sufficient to push the second deck so that it slides within the first deck until it reaches the present length of the platform set by the dimensions of the cage with which said platform is to be associated.

Just as simply, the hooks 30, 130, 230 move along the perimeter 31 by means of a manual intervention.

In this manner, it is possible to move the hooks 30, 130, 230 so as to adapt their mutual length according to the spaces available between the uprights 53 of the cage 50.

The hooks 30, 130, 230 therefore can also move externally with respect to the longitudinal edges 19 of the first deck 11.

In practice it has been found that the invention thus described achieves the intended aim and objects.

In particular, the present invention provides a platform that can be installed easily inside cages having very different dimensions.

Moreover, the present invention provides a platform whose length can be adapted both to the longitudinal dimensions and to the transverse dimensions of a same cage.

Moreover, the present invention provides a platform on which the occupants of the cage can transit and stay without dangers for their safety but from which said small animals can descend and climb nimbly and instinctively.

Moreover, the present invention provides a platform with which it is possible to associate a conventional crawling tube for small animals.

Moreover, the present invention provides a platform that can be produced at low cost also by molding plastics.

In practice, the materials employed, so long as they are compatible with the specific use, as well as the dimensions, may be any according to requirements and to the state of the art.

The disclosures in Italian Utility Model Application No. PD2003U000110 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A platform for cages, particularly for small animals such as rodents and the like, of the type constituted by a deck (11, 111) provided with means (12) for fixing to the grid-like walls (51) of a cage (50), **characterized in that** said deck (11, 111) has telescopic extension means (13) for adapting to the dimensions of said cage (50).

2. The platform according to claim 1, **characterized in that** said telescopic extension means (13) are constituted by at least one additional deck (14, 114), which is adapted to slide, by way of guiding means (15), parallel and adjacent to said deck (11, 111), which contains it in a shorter retracted configuration of said platform (10, 110, 210).

3. The platform according to one or more of the preceding claims, **characterized in that** said guiding means (15) are formed by at least one sliding guide (16), which is provided on said deck (11, 111), a complementarily shaped sliding strip (17) engaging in said at least one sliding guide (16) and being rigidly coupled to said additional deck (14, 114).

4. The platform according to one or more of the preceding claims, **characterized in that** said at least one sliding guide (16) is provided by two lateral guides (18) arranged inside the longitudinal edges (19) of said deck (11, 111).

5. The platform according to one or more of the preceding claims, **characterized in that** said complementarily shaped strip (17) is constituted by the outer lateral edge (20) of said additional deck (14, 114) that corresponds to each one of the lateral guides (18).

6. The platform according to one or more of the preceding claims, **characterized in that** said deck (11) has a passage (21, 221) for small animals and the like.

7. The platform according to one or more of the preceding claims, **characterized in that** said additional deck (14) is provided with an opening (22) at said passage (21, 221).

8. The platform according to one or more of the preceding claims, **characterized in that** said fixing means (12) are constituted by at least three hooks (30, 130, 230), which can move along the perimeter (31) of said platform (10, 110,210).

9. The platform according to one or more of the preceding claims, **characterized in that** each one of said hooks (30, 130, 230) comprises an articulated arm (33), which is adapted to wrap around a cross-member (52) of a grid-like wall (51) and to interlock reversibly by way of a head (34) of said arm (33), which is shaped so as to accommodate the end (35) of a mushroom-shaped tab (36) that protrudes from a plate-like portion (37) of each one of said hooks (30, 130, 230) below said cross-member (52).

10. The platform according to one or more of the preceding claims, **characterized in that** it comprises four of said at least three hooks (30, 130, 230), which are arranged in pairs on the transverse sides (32) with respect to the direction of extension of said platform (10, 110, 210).
